# EUROPÄISCHE PATENTSCHRIFT

(11) **EP 1 305 539 B1**
(45) Veröffentlichungstag und Bekanntmachung des Hinweises auf die Patenterteilung: **02.01.2004**
(21) Anmeldenummer: 01967174.2
(22) Anmeldetag: 14.07.2001
(51) Int. Cl.: F16F 6/00

(54) **BEWEGUNGSDÄMPFER**
MOTION ABSORBER
AMORTISSEUR DE MOUVEMENT

(30) Priorität: 20.07.2000 DE 10035687
(43) Veröffentlichungstag der Anmeldung: 02.05.2003
(73) Patentinhaber: Hörauf & Kohler Verwaltungs KG, 86199 Augsburg (DE)
(72) Erfinder: WILLNER, Wilfried, 86199 Augsburg (DE)
(74) Vertreter: Rapp, Bertram, Dr.
(86) Internationale Anmeldenummer: PCT/EP2001/008138
(87) Internationale Veröffentlichungsnummer: WO 2002/008632

(56) Entgegenhaltungen:
- EP-A- 0 878 639
- DE-A- 19 840 244
- FR-A- 1 204 083
- FR-A- 2 301 736
- RU-C- 2 002 139
- US-A- 4 432 441
- PATENT ABSTRACTS OF JAPAN vol. 1996, no. 09, 30. September 1996 (1996-09-30) & JP 08 131480 A (DELTA KOGYO CO LTD), 28. Mai 1996 (1996-05-28)

## Beschreibung

Die Erfindung betrifft einen Bewegungsdämpfer nach dem Oberbegriff des Anspruchs 1. Solch ein Bewegungsdämpfer ist aus JP-A-08 131 480 bekannt.

Derartige Bewegungsdämpfer finden beispielsweise Anwendung im Kfz-Bereich zur Dämpfung der Bewegung von beweglichen Bauteilen, wie beispielsweise Heckklappen, Handschuhfachklappen oder einschiebbaren Cup-Holder, Aschenbecher oder dergleichen.

Um abrupte Öffnungs- oder Schließbewegungen zu vermeiden, ist es wünschenswert die Belegung der Bauteile zu dämpfen. Handschuhfachklappen sind beispielsweise so ausgestaltet, daß sie bei Entriegelung unter Einwirkung der Schwerkraft in die Offen-Stellung klappen. Damit die Handschuhfachklappe nicht plötzlich herunterklappt und auf die Beine des Passagiers fällt, soll bei der Aufschwenkbewegung der Bewegungsdämpfer eine Verlangsamung der Bewegung bewirken. Umgekehrt ist es jedoch wünschenswert, daß beim Schließen der Klappe der Bewegungsdämpfer möglichst keinen Widerstand bietet.

Aus dem Stand der Technik sind zu diesen Zwecken pneumatische Dämpfer oder Flüssigkeitsdämpfer bekannt. Diese weisen ein Gehäuse auf, in dem ein bezüglich des Gehäuses beweglich gelagertes Verbindungsglied angeordnet ist. Das Verbindungsglied ist an einem Ende mit dem in seiner Bewegung zu dämpfenden Teil, beispielsweise der schwenkbaren Klappe, verbunden. Die Bewegung des Verbindungsgliedes wird innerhalb des Gehäuses durch ein Dämpfungsglied gedämpft. Bei Flüssigkeitsdämpfern umfaßt das Dämpfungsglied ein Flügelrad, welches sich in einem Flüssigkeitsbad bewegt. Die Dämpfung des Flügelrades erfolgt durch die innere Reibung der viskosen Flüssigkeit.

Flüssigkeitsdämpfer weisen den Nachteil auf, daß die Dämpfung des Verbindungsglieds aufgrund der Temperaturabhängigkeit der Viskosität der dämpfenden Flüssigkeit stark von der Temperatur abhängt. Dies hat zur Folge, daß bei sehr hohen Temperaturen, welche insbesondere im Sommer in einem Kraftfahrzeug häufig vorkommen, die Dämpfungswirkung stark reduziert ist. Ferner kann es bei sehr hohen Temperaturen auch zu einem Auslaufen der Flüssigkeit durch Gehäuselecks kommen.

Der vorliegenden Erfindung liegt daher die Aufgabe zugrunde, einen Bewegungsdämpfer der eingangs genannten Art zur Verfügung zu stellen, bei dem die Dämpfungswirkung möglichst schwach von der Umgebungstemperatur abhängt.

Gelöst wird diese Aufgabe mit den kennzeichnenden Merkmalen von Anspruch 1. Vorteilhafte Ausführungsbeispiele sind den Unteransprüchen zu entnehmen.

Die Erfindung wird im folgenden anhand von Ausführungsbeispielen unter Bezugnahme auf die begleitenden Zeichnungen näher erläutert. Die Zeichnungen zeigen.
- **Figur 1:**: Querschnitt durch eine erste bevorzugte Ausführungsform eines erfindungsgemäßen Bewegungsdämpfers, ausgebildet als Rotationsdämpfer;
- **Figur 2:**: Querschnitt durch eine bevorzugte Ausführungsform des Bewegungsdämpfers von Figur 1;
- **Figur 3:**: Querschnitt durch eine weitere bevorzugte Ausführungsform des Bewegungsdämpfers von Figur 1;
- **Figur 4:**: Querschnitt durch eine zweite bevorzugte Ausführungsform eines erfindungsgemäßen Bewegungsdämpfers, ausgebildet als Hubdämpfer;
- **Figur 5:**: Seitenansicht eines in seiner Bewegung zu dämpfenden Teils mit einem erfindungsgemäßen Bewegungsdämpfer.

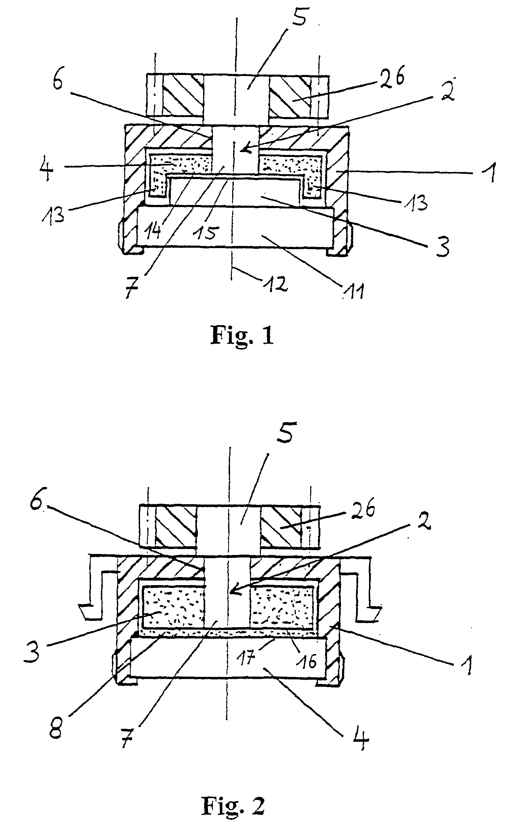

Figur 1 zeigt im Querschnitt eine erste bevorzugte Ausführungsform des erfindungsgemäßen Bewegungsdämpfers. Dieser weist ein zylindrisches Gehäuse 1 auf, in dem ein bezüglich des Gehäuses 1 beweglich gelagertes Verbindungsglied 2 angeordnet ist. Das Verbindungsglied 2 ist an einem Ende 5 mit dem in seiner Bewegung zu dämpfenden Teil 25, beispielsweise einer Klappe oder einem Cup-Holder, verbunden. Die Verbindung mit dem zu dämpfenden Teil 25 dient zur Übertragung der Dämpfungsbewegung vom im Gehäuse 1 gedämpften Verbindungsglied 2 auf das bewegliche Teil 25.

Der Bewegungsdämpfer von Figur 1 ist als Rotationsdämpfer ausgebildet. Hierzu ist das stabförmige Verbindungsglied 2 drehbar im Gehäuse 1 gelagert. Das in der Figur obere Ende 5 des Verbindungsglieds 2 ist durch eine stirnseitige Öffnung 6 aus dem Gehäuse 1 herausgeführt. An der Gehäuse-Stirnseite, welche der Öffnung 6 gegenüberliegt, ist im Innern des Gehäuses ein Permanentmagnet 3 angeordnet. Der Permanentmagnet 3 ist scheibenförmig ausgebildet und an der Innenseite des stirnseitigen Gehäusedeckels 11 angeklebt oder angeschraubt. Der Permanentmagnet 3 ist dabei so angeordnet, daß seine Polrichtung parallel zur Drehachse 12 des Verbindungsglieds 2 verläuft. Der Nordpol des Permanentmagneten 3 kann dem Gehäusedeckel 11 zugewandt oder abgewandt sein. Am in der Figur unteren Ende des Verbindungsglieds 2 ist eine scheibenfönnige Metallplatte 4 aus einem magnetisierbaren Material starr mit dieser verbunden. Zur starren Befestigung der Metallplatte 4 am Verbindungsglied 2 ist in der Metallplatte 4 eine zentrale Bohrung eingebracht, in welche das untere Ende des Verbindungsglieds 2 eingesetzt ist. Die Befestigung der Metallplatte 4 am Verbindungsglied 2 erfolgt durch Klemmung, Klebung Verschraubung oder ähnliche Mittel.

An der Unterseite der Metallplatte 4 ist ein an der Außenseite radial umlaufender Kragen 13 ausgebildet. Der Kragen 13 umschließt den oberen Teil des scheibenförmigen Permanentmagneten 3. Die flache Unterseite 14 der Metallplatte 4 liegt der Oberseite 15 des Magneten 3 im Abstand gegenüber. Zwischen der Oberseite 15 des Permanentmagneten 3 und der Unterseite 14 der Metallplatte 4 ist ein Zwischenraum ausgebildet. Ebenso ist zwischen der radialen Außenseite des Magneten 3 und der Innenseite des Kragens 13 ein Zwischenraum ausgebildet. Um einen genau definierten Abstand zwischen der Unterseite 14 der Metallplatte und der Oberseite 15 des Permanentmagneten 3 einzuhalten, kann zweckmäßigerweise ein Distanzstück zwischen Magnet 3 und Metallplatte 4 vorgesehen sein. Sämtliche Teile des Bewegungsdämpfers, mit Ausnahme der Metallplatte 4 und des Permanentmagneten, sind zweckmäßig aus Kunststoff.

Wenn das Verbindungsglied 2 in Drehbewegung versetzt wird, dreht sich auch die starr am Verbindungsglied 2 angeordnete Metallplatte 4 bezüglich des Gehäuses 1. Die Drehung der Metallplatte 4 erfolgt dabei im statischen Magnetfeld des Permanentmagneten 3. Dadurch werden in der Metallplatte 4 Wirbelströme erzeugt. Diese Wirbelströme wirken der Drehbewegung der Metallplatte 4 entgegen und bewirken daher eine Bremskraft auf die Metallplatte 4. Um eine Bremskraft auf die Metallplatte 4 zu erzeugen, muß diese aus einem magnetisierbaren Material, vorzugsweise einem ferromagnetischen Material, gefertigt sein.

Die Stärke der so erzeugten Bremskraft hängt wesentlich von der Größe des Zwischenraums zwischen dem Magneten 3 und der Metallplatte 4 ab. Auf diese Weise kann die Bremskraft beispielsweise durch genaue Einstellung des Abstandes Abstand zwischen der Unterseite 14 der Metallplatte 4 und der Oberseite 15 des Permanentmagneten 3 auf einen gewünschten Wert eingestellt werden.

Die magnetische Bremskraft auf die Metallplatte 4 wird über das Verbindungsglied 2 auf das bewegliche Teil 25 übertragen. Somit wird die Bewegung des beweglichen Teils 25 gedämpft.

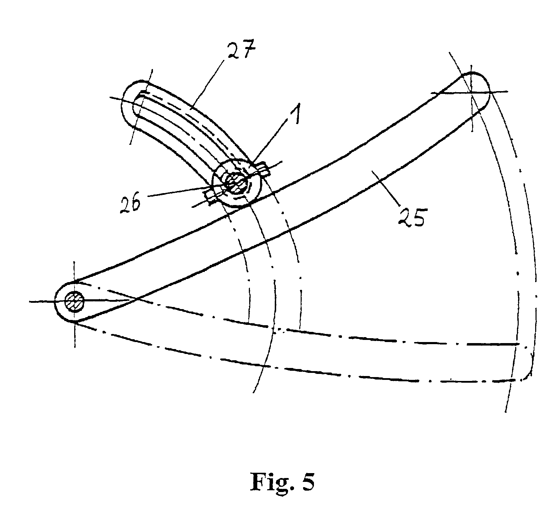

Figur 5 zeigt beispielhaft eine Handschuhfachklappe 25, welche mit einem erfindungsgemäßen Bewegungsdämpfer verbunden ist. Zur Verbindung des Bewegungsdämpfers mit der Klappe 25 weist das Verbindungsglied 2 an seinem aus dem Gehäuse herausgeführten Ende 5 ein Zahnrad 26 auf. Der Bewegungsdämpfer ist ortsfest im Handschuhfach eingebaut. An der Handschuhfachklappe 25 ist eine kreissegmentförmig gekrümmte Zahnstange 27 angebracht. Die Zahnstange 27 und der Bewegungsdämpfer sind zueinander so angeordnet, daß das Zahnrad 26 mit der Zahnstange 27 kämmt. Durch die Kämmung der Zahnstange 27 mit dem Zahnrad 26 wird die Bewegung der Handschuhfachklappe 25 als Drehbewegung auf das Verbindungsglied 2 im Gehäuse 1 des Bewegungsdämpfers übertragen. Da die Drehbewegung des Verbindungsglieds 2 im Gehäuse 1 des Bewegungsdämpfers durch die Magnetkraft gedämpft ist, wird auch die Bewegung der Handschuhfachklappe 25 gedämpft.

Figur 2 zeigt eine bevorzugte Ausführungsform des Rotationsdämpfers von Figur 1. Die Anordnung des Verbindungsglieds 2 im Gehäuse 1 entspricht im wesentlichen der Ausführungsform von Figur 1. Gleiche Teile sind daher mit identischen Bezugszeichen versehen.

Am in der Figur unteren Ende des Verbindungsglieds 2 ist ein scheibenförmiger Permanentmagnet 3 starr mit diesem verbunden. Hierzu ist im Permanentmagneten 3 eine zentrale Bohrung eingebracht, in welche das untere Ende des Verbindungsglieds 2 eingesteckt ist. Die starre Verbindung des Verbindungsglieds 2 in der Bohrung des Permanentmagneten 3 erfolgt durch Klemmung, Klebung oder Verschraubung.

Das Gehäuse 1 ist an der der Öffnung 6 gegenüberliegenden Stirnseite durch eine scheibenförmige Metallplatte 4 verschlossen. Die Unterseite 16 des Permanentmagneten 3 ist dabei der Oberseite 17 der Metallplatte 4 im Abstand gegenüberliegend angeordnet. Zwischen der Unterseite 16 des Permanentmagneten 3 und der Oberseite 17 der Metallplatte 4 ist ein Luftspalt ausgebildet. Zur genauen Einstellung des Abstands kann zweckmäßigerweise wiederum ein Distanzstück vorgesehen sein.

Wenn sich das Bewegungsglied 2 bezüglich des Gehäuses 1 dreht, wird auch der Permanentmagnet 3 im Innern des Gehäuses in Drehung versetzt. Durch die Drehbewegung des Magneten 3 werden in der Metallplatte 4 Wirbelströme erzeugt. Diese wirken ihrer Ursache, nämlich der Drehung des Magneten 3, entgegen. Somit wird die Drehbewegung des Magneten 3 bezüglich des Gehäuses 1 abgebremst. Diese Bremskraft auf den Magneten 3 wird über das Verbindungsglied 2 auf das bewegliche Teil 25 übertragen. Auf diese Weise wird die Bewegung des beweglichen Teils 25 gedämpft.

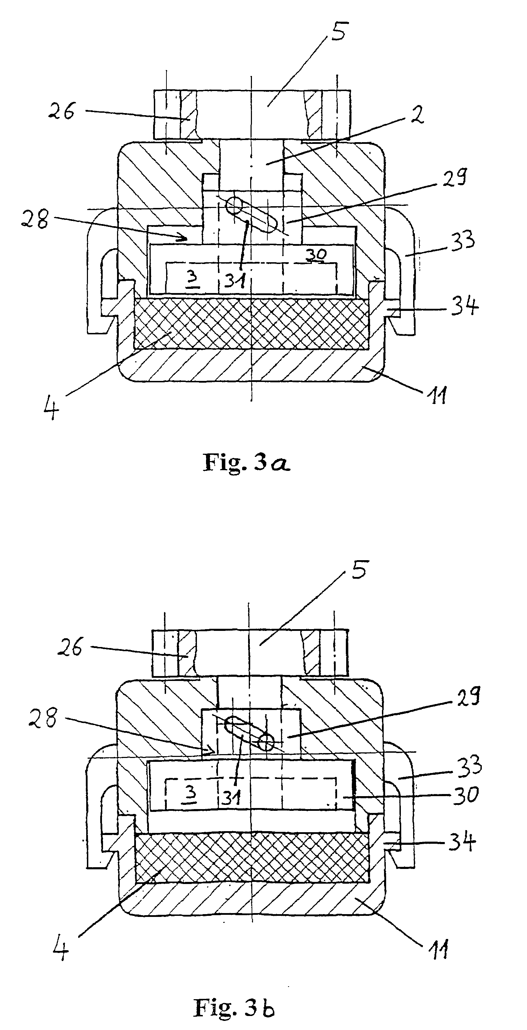

Figur 3 zeigt eine bevorzugte Ausführungsform des erfindungsgemäßen Bewegungsdämpfers, welche ebenfalls als Rotationsdämpfer ausgebildet ist und drehrichtungsabhängig in einem stark dämpfenden Lasthub (Figur 3a) bzw. einem schwach dämpfenden Leerhub (Figur 3b) betrieben wird.

Der Rotationsdämpfer von Figur 3 umfaßt ein zylindrisches Gehäuse 1, welches an einer Stirnseite durch einen Gehäusedeckel 11 geschlossen ist. Der Gehäusedeckel 11 ist am Gehäuse durch Rastelemenete , welche einen Bügel 33 und eine Rastnase 34 umfaßen, angeklemmt. Das Verbindungsglied 2 ist im Gehäuse 1 drehbar gelagert. Am aus dem Gehäuse herausgeführten Ende 5 des Verbindungsglieds 2 ist ein Zahnrad 26 angeordnet. Über das Zahnrad 26 ist das Verbindungsglied 2 mit dem in seiner Bewegung zu dämpfenden Teil 25 verbindbar, wie beispielsweise in Figur 5 gezeigt.

Im Innern des Gehäuses 1 ist an der Stirnseite, welche durch den Gehäusedeckel 11 geschlossen ist, eine Metallplatte 4 angeordnet. Die Metallplatte 4 ist durch geeignete Mittel starr mit dem Gehäuse 1 und/oder dem Gehäusedeckel 11 verbunden. Am in der Figur unteren Ende des Verbindungsglieds 2 ist ein Aufnahmegehäuse 28 angeordnet. Das Aufnahmegehäuse 28 besteht aus einem rohrförmigen Schaft 29 und einem zylinderförmigen Topf 30. In dem Topf 30 ist ein scheibenförmiger Permanentmagnet 3 angeordnet. Dabei ist der Permanentmagnet 3 starr mit dem Topf 30 durch Kleben, Klemmen oder Verschrauben verbunden. Das in der Figur untere Ende des Verbindungsglieds 2 ragt in den Schaft 29 hinein. Der Innendurchmesser des Schafts 29 ist an den Durchmesser des unteren Endes des Verbindungsglieds so angepaßt, daß des Verbindungsglied im Schaft 29 beweglich bleibt. Der Schaft 29 weist ein schräg zur Achse des Verbindungsglieds verlaufendes Langloch 31 auf. An der Außenseite des Verbindungsglieds 2 ist ein Führungsstift 32 angebracht. Dieser Führungsstift 32 greift in das Langloch 31 ein.

Das Aufnahmegehäuse 28 mit dem Schaft 29 ist axial und radial bezüglich des Verbindungsglieds zwischen einer oberen Grenzstellung und einer unteren Grenzstellung verschiebbar. Figur 3a zeigt das Aufnahmegehäuse 28 in seiner unteren Grenzstellung. In dieser liegt das Aufnahmegehäuse 28 und der sich im Topf 30 des Aufnahmegehäuses 28 befindliche Permanentmagnet 3 auf der Metallplatte 4 auf. Wenn das Verbindungsglied 2 in der in Figur 3a dargestellten Position im Uhrzeigersinn (bei Blickrichtung auf das aus dem Gehäuse herausgeführten Ende 5) gedreht wird, hebt sich das Aufnahmegehäuse 28 mit dem Permanentmagneten 3 bezüglich der Metallplatte 4 ab, da der Eingriff des Führungsstifts 32 in das Langloch 31 das Aufnahmegehäuse 28 nach oben zieht. Somit wird durch eine Drehung des Verbindungsglieds 2 im Uhrzeigersinn das Aufnahmegehäuse 28 in seine obere Grenzstellung gebracht, welche in Figur 3b gezeigt ist. Wird hingegen das Verbindungsglied 2 in der Stellung gemäß Figur 3b im Gegenuhrzeigersinn gedreht, so sorgt der Eingriff des Führungsstifts 32 in das Langloch 31 dafür, daß das Aufnahmegehäuse 28 wieder in seine untere Grenzstellung gemäß Figur 3a gedrückt wird.

In der oberen Grenzstellung des Aufnahmegehäuses 28 ist der Permanentmagnet 3 im Abstand zur Metallplatte 4 angeordnet, wohingegen er in der unteren Grenzstellung auf dieser aufliegt oder jedenfalls einen nur geringen Abstand zur Metallplatte 4 aufweist. Aufgrund des großen Abstands zwischen der Metallplatte 4 und dem Permanentmagneten 3 in der oberen Grenzstellung, ist in dieser Stellung die magnetische Bremskraft stark reduziert. Der Bewegungsdämpfer befindet sich also in einer Leerhubstellung (Figur 3b).

In der unteren Grenzstellung, in welcher der Permanentmagnet 3 auf der Metallplatte 4 aufliegt, wirkt eine starke Bremskraft zwischen der Metallplatte 4 und dem Permanentmagneten 3, so daß der Bewegungsdämpfer in dieser Stellung im Arbeitshub mit starker Dämpfung arbeitet.

Der Rotationsdämpfer von Figur 3 arbeitet wie folgt. Beim Öffnen der beweglichen Klappe 25 wird das Verbindungsglied 2 im Gegenuhrzeigersinn (bei Blickrichtung auf das aus dem Gehäuse herausgeführten Ende 5, also in Fig. 5 in die Papierebene hinein) in Drehung versetzt. Dadurch wird zunächst - wie oben beschrieben - das Aufnahmegehäuse 28 in seine untere Grenzstellung gebracht, in welcher der Bewegungsdämpfer im Lasthub arbeitet. Die weitere Bewegung der Klappe 25 wird auf das Verbindungsglied 2 als Drehbewegung im Gehäuse 1 übertragen. Da sich der Bewegungsdämpfer im Lasthub befindet, wird diese Drehbewegung des Verbindungsglieds 2 im Gehäuse 1 durch die Magnetkraft zwischen der Metallplatte 4 und dem auf dieser aufliegenden Permanentmagneten 3 stark gedämpft.

Beim Öffnen der Klappe 25 wird die Bewegung der Klappe 25 in eine Drehbewegung des Verbindungsglieds 2 im Uhrzeigersinn übertragen. Dabei wird zunächst der Bewegungsdämpfer in der oben beschriebenen Weise in den Leerhub gebracht. Im Leerhub sind das Aufnahmegehäuse 28 und der darin befestigte Permanentmagnet 3 im Abstand zur Metallplatte 4 angeordnet. Durch den vergrößerten Abstand zwischen Metallplatte 4 und Permanentmagnet 3 ist also die magnetische Bremskraft stark vermindert. Auf diese Weise wird ein erleichtertes Einschieben der Klappe in die Schließstellung ohne oder unter zumindest stark verminderter Wirkung einer Bremskraft ermöglicht.

In dem in Figur 3 dargestellten Ausführungsbeispiel kann die Anordnung der Metallplatte 4 und des Permanentmagneten 3 vertauscht sein. Ebenso kann die Anordnung des Langlochs 31 am Schaft 29 und des Führungsstifts 31 am Verbindungsglied 2 miteinander vertauscht sein, so daß statt dessen das Langloch 31 als Ausnehmung an der Außenfläche des Verbindungsglieds 2 ausgebildet ist und der Führungsstift 32 an der Innenfläche des Schafts 29 angebracht ist. Wesentlich ist lediglich, daß das Aufnahmegehäuse 28 bezüglich des Verbindungsglieds 2 axial zwischen einer oberen Grenzstellung und einer unteren Grenzstellung verschiebbar ist. Die Verschiebung von einer Grenzstellung in die andere erfolgt dabei durch Drehung des Verbindungsglieds 2 bezüglich des Gehäuses 1.

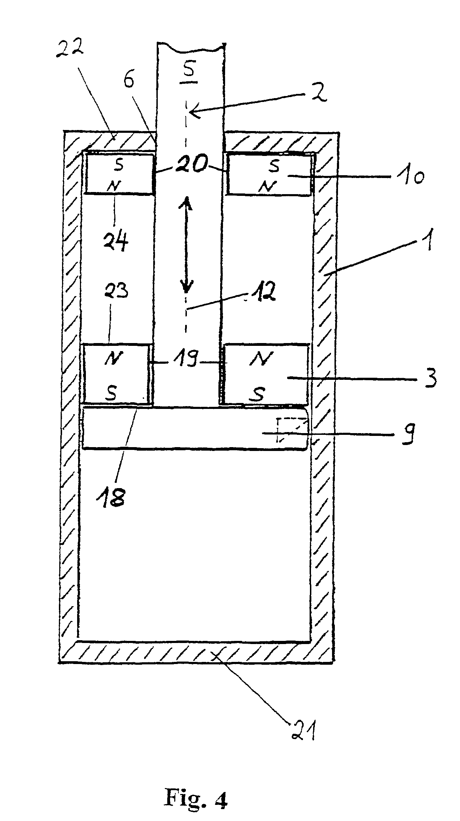

Figur 4 zeigt eine weitere bevorzugte Ausführungsform des erfindungsgemäßen Bewegungsdämpfers, welche als Hubdämpfer ausgebildet ist.

Der Hubdämpfer von Figur 4 weist ein zylinderförmiges Gehäuse 1 und einen darin axial verschiebbaren Kolben 9 auf. Am Kolben 9 ist ein als Kolbenstange ausgebildetes Verbindungsglied 2 angeordnet. Das in der Figur obere Ende 5 der Kolbenstange 2 ist durch eine stimseitige Öffnung 6 aus dem Gehäuse 1 herausgeführt. Das aus dem Gehäuse herausgeführte Ende 5 des Verbindungsglieds 2 ist starr oder über ein Zugseil mit dem beweglichen Teil (hier nicht dargestellt) verbunden.

Auf der Oberseite 18 des Kolbens 9 ist ein scheibenförmiger Permanentmagnet 3 angeordnet. Der Permanentmagnet 3 weist eine zentrale Bohrung 19 auf, durch welche die Kolbenstange 2 verläuft. In der in Figur 3 gezeigten Ausführungsform verläuft die Polachse des Magneten 3 parallel zur Achse 12 der Kolbenstange 2, wobei der Südpol S zur Oberseite 18 des Kolbens 9 gerichtet ist.

Im Innern des Gehäuses 1 ist an der Stirnseite 22, welche die Öffnung 6 aufweist, ein weiterer scheibenförmiger Permanentmagnet 10 angeordnet. Dieser weist eine zentrale Bohrung 20 auf, durch welche die Kolbenstange 2 geführt ist. Der Permanentmagnet 10 ist dabei so ausgerichtet, daß seine Polachse parallel zur Achse 12 der Kolbenstange 2 verläuft und sein Nordpol N dem Nordpol N des Permanentmagneten 3 gegenüberliegt.

In der Grundstellung des beweglichen Teils 25, beispielsweise bei geschlossener Klappe, befindet sich der Hubdämpfer von Figur 3 ebenfalls in einer Grundstellung, in der der Kolben 9 an der unteren Stirnseite 21 des Gehäuses 1 anliegt. Wird die Klappe geöffnet, bewegt sich die Kolbenstange 2 in axialer Richtung aus dem Gehäuse 1 heraus. Dadurch wird der Kolben 9 in Richtung der oberen Stirnseite 22 bewegt. Diese Hubbewegung des Kolbens 9 wird durch die abstoßenden Magnetkräfte der Permanentmagneten 3 und 10 gebremst. Die Bremskraft wird dabei um so stärker, je näher der Kolben 9 in Richtung der oberen Stirnseite 22 gelangt. Die Bremskraft auf den Kolben 9 wird über die Kolbenstange 2 auf das zu bewegende Teil 25 übertragen. Auf diese Weise wird die Bewegung des zu bewegenden Teils 25 gedämpft. Die Dämpfung nimmt dabei zu, je weiter die Klappe geöffnet wird.

Bei vollständig geöffneter Klappe liegt die Oberseite 23 des Magneten 3 auf der Unterseite 24 des Magneten 10 an. Damit sich die Klappe durch die abstoßenden Kräfte zwischen den Magneten 3 und 10 nicht wieder selbsttätig verschließt, ist zweckmäßgerweise am Kolben 9 eine Arretierungsvorrichtung vorgesehen, durch welche die Klappe in der Offenstellung verriegelbar ist.

Sobald die Klappe wieder in Richtung ihrer Schließstellung geschoben wird, öffnet sich die Arretierungsvorrichtung und gibt den Kolben 9 wieder frei. Dieser wird daraufhin axial in das zylinderförmige Gehäuse 1 eingeschoben. Diese Einschubbewegung wird durch die abstoßenden Kräfte der Magneten 3 und 10 unterstützt. Auf diese Weise wird eine erleichterte Schließbewegung der Klappe gewährleistet.

Der erfindungsgemäße Bewegungsdämpfer weist gegenüber den bekannten Bewegungsdämpfern den Vorteil auf, daß die Dämpfung des Verbindungsglieds 2 im Gehäuse 1 nicht von der Umgebungstemperatur abhängt. Weiterhin ist die durch das Magnetfeld des oder der Permanentmagneten 3, 10 erzeugte Bremskraft nur schwach von der Geschwindigkeit des bewegten Teils 25, beispielsweise der Öffnungsgeschwindigkeit einer Klappe, abhängig. Dies bewirkt, daß insbesondere beim Beginn des Öffnungsvorgangs der Klappe eine Grunddämpfung vorhanden ist. Bei den bekannten Bewegungsdämpfern ist aufgrund der sehr geringen Geschwindigkeit beim Beginn der Öffnungsbewegung nur eine sehr kleine Dämpfungswirkung vorhanden.

In einem besonders bevorzugten Ausführungsbeispiel des erfindungsgemäßen Bewegungsdämpfers ist im Innern des Gehäuses eine viskose Flüssigkeit, beispielsweise Silikonöl oder ein flüssiges Polymere, eingebracht. Die Flüssigkeit verteilt sich im Innern des Gehäuses 1 und tritt insbesondere beim Rotationsdämpfer gemäß den Figuren 1 und 2 in den Zwischenraum zwischen der Metallplatte 4 und dem Permanentmagneten 3.

Durch innere Reibung in der eingebrachten Flüssigkeit wird die Bewegung des Verbindungsglieds 2 zusätzlich zur magnetischen Bremskraft durch Reibungskraft gedämpft. Diese Dämpfung durch Reibungskraft ist - wie bei den bekannten Flüssigkeitsdämpfern - stark von der Geschwindigkeit des beweglichen Teils 25, beispielsweise einer Klappe, abhängig. In Kombination mit der magnetischen Bremskraft des erfindungsgemäßen Dämpfers weist diese bevorzugte Ausführungsform also eine von der Geschwindigkeit der Klappe fast unabhängige Grunddämpfung sowie eine stark von der Geschwindigkeit abhängige Zusatzdämpfung auf. Dies bewirkt, daß während des gesamten Öffnungsvorgangs der Klappe eine Dämpfungswirkung vorhanden ist. Beim Beginn des Öffnungsvorgangs, bei dem die Klappe eine sehr geringe Geschwindigkeit hat, liegt eine vergleichsweise niedrige Grunddämpfung, hervorgerufen durch die Magnetkraft, vor. Im Verlauf des Öffnungsvorgangs der Klappe nimmt deren Geschwindigkeit zu, wodurch die fluide Dämpfung zunimmt. Auf diese Weise werden zu große Öffnungsgeschwindigkeiten der Klappe vermieden.

## Patentansprüche

1. Bewegungsdämpfer mit einem Gehäuse (1), einem bezüglich des Gehäuses beweglich gelagerten Verbindungsglied (2), welches mit einem in seiner Bewegung zu dämpfenden, beweglichen Teil (25) verbindbar ist, und mit einem zweiteiligen Dämpfungsglied, welches einen Permanentmagneten (3) und einen Gegenpol (4) umfaßt, wobei die Bewegung des Verbindungsglieds (2) im Gehäuse (1) durch die Magnetkraft zwischen dem Permanentmagneten (3) und dem Gegenpol (4) gedämpft ist, **dadurch gekennzeichnet, daß** der Abstand zwischen dem Permanentmagneten (3) und dem Gegenpol (4) zwischen einer oberen und einer unteren Grenzstellung veränderbar ist durch Drehung des Verbindungsglieds (2) bezüglich des Gehäuses (1), wobei sich der obere Grenzstellungsabstand bei Drehung des Verbindungsglieds (2) in einer Richtung und der untere Grenzstellungsabstand bei Drehung des Verbindungsglieds in der entgegengesetzten Richtung einstellt.

2. Bewegungsdämpfer nach Anspruch 1, **dadurch gekennzeichnet, daß** der Permanentmagnet am Verbindungsglied angeordnet ist und der Gegenpol (4) im Innem des Gehäuses im Abstand zum Permanentmagneten (3) angeordnet ist und von einem weiteren Permanentmagneten oder von einer Platte aus einem magnetisierbaren Material gebildet ist.

3. Bewegungsdämpfer nach einem der Ansprüche 1 oder 2, **dadurch gekennzeichnet, daß** das Verbindungsglied (2) als Welle ausgebildet und drehbar im Gehäuse (1) gelagert ist und das eine Ende (5) des Verbindungsglieds (2) durch eine stirnseitige Öffnung (6) aus dem Gehäuse (1) herausgeführt ist.

4. Bewegungsdämpfer nach Anspruch 3, **dadurch gekennzeichnet, daß** das Dämpfungsglied von einem am anderen Ende des Verbindungsglieds (2) angeordneten Permanentmagneten (3) und einer im Innern des Gehäuses (1) an der der Öffnung (6) gegenüberliegenden Stirnseite und im Abstand zum Permanentmagneten (3) angeordneten Metallplatte (4) gebildet ist.

5. Bewegungsdämpfer nach Anspruch 3, **dadurch gekennzeichnet, daß** das Dämpfungsglied von einer am anderen Ende des Verbindungsglieds (2) angeordneten Metallplatte (4) und einem im Innern des Gehäuses an der der Öffnung (6) gegenüberliegenden Stirnseite und im Abstand zur Metallplatte (4) angeordneten Permanentmagneten (3) gebildet ist.

6. Bewegungsdämpfer nach einem der Ansprüche 3 bis 5, **dadurch gekennzeichnet, daß** der Gegenpol (4) stirnseitig im Innern des Gehäuses angeordnet und starr mit diesem verbunden ist und der Permanentmagnet (3) am anderen Ende des Verbindungsglieds (2) axial verschiebbar zwischen einer oberen Grenzstellung und einer unteren Grenzstellung bezüglich des Verbindungsglieds (2) angeordnet ist, wobei sich der Permanentmagnet (3) bei Drehung des Verbindungsglieds (2) in eine Richtung in seine obere Grenzstellung und bei Drehung des Verbindungsglieds (2) in die entgegengesetzte Richtung in seine untere Grenzstellung bewegt.

7. Bewegungsdämpfer nach einem der Ansprüche 3 bis 5, **dadurch gekennzeichnet, daß** der Permanentmagnet (3) stirnseitig im Innern des Gehäuses (1) angeordnet und starr mit diesem verbunden ist und der Gegenpol (4) am anderen Ende des Verbindungsglieds (2) axial verschiebbar zwischen einer oberen Grenzstellung und einer unteren Grenzstellung bezüglich des Verbindungsglieds (2) angeordnet ist, wobei sich der Gegenpol (4) bei Drehung des Verbindungsglieds (2) in eine Richtung in seine obere Grenzstellung und bei Drehung des Verbindungsglieds (2) in die entgegengesetzte Richtung in seine untere Grenzstellung bewegt.

8. Bewegungsdämpfer nach einem der voranstehenden Ansprüche, **dadurch gekennzeichnet, daß** zumindest im Bereich zwischen dem Permanentmagneten (3) und dem Gegenpol (4) ein viskoses Fluid (8) eingebracht ist, welches die Bewegung des Verbindungsglieds (2) zusätzlich zur magnetischen Bremskraft geschwindigkeitsabhängig dämpft.

## Claims

1. A motion absorber comprising a housing (1), a connecting member (2) movably supported with respect to the housing, which connecting member can be connected to a movable part (25), the movement of which is to be absorbed, and comprising a two-part absorber element, which includes a permanent magnet (3) and an opposite pole (4), whereby the movement of the connecting member (2) in the housing (1) is absorbed by the magnetic force between the permanent magnet (3) and the opposite pole (4), wherein the distance between the permanent magnet (3) and the opposite pole (4) can be changed between an upper and a lower boundary position by rotation of the connecting member (2) with respect to the housing (1), whereby the upper boundary position distance is adjusted upon rotation of the connecting member (2) in one direction, and the lower boundary position distance upon rotation of the connecting member in the opposite direction.

2. The motion absorber according to Claim 1, wherein the permanent magnet is arranged on the connecting member, and the opposite pole (4) is arranged inside of the housing spaced from the permanent magnet (3), and is formed by a further permanent magnet or by a plate made of a magnetizable material.

3. The motion absorber according to one of the Claims 1 or 2, wherein the connecting member (2) is designed as a shaft and is supported rotatably in the housing (1), and the one end (5) of the connecting member (2) extends outwardly from the housing through an opening (6) .

4. The motion absorber according to Claim 3, wherein the absorber element is formed by a permanent magnet (3) arranged at the other end of the connecting member (2), and a metal plate (4) arranged inside of the housing (1) on a front side opposite the opening (6) and at a distance from the permanent magnet (3).

5. The motion absorber according to Claim 3, wherein the absorber element is formed by a metal plate (4) arranged at the other end of the connecting member (2), and a permanent magnet (3) arranged inside of the housing on the face opposite the opening (6) and at a distance from the metal plate (4).

6. The motion absorber according to one of the Claims 3 to 5, wherein the opposite pole (4) is arranged on an inside face of the housing and is rigidly connected to same, and the permanent magnet (3) is arranged axially movably with respect to the connecting member (2) at the other end of the connecting member (2) between an upper boundary position and a lower boundary position, whereby the permanent magnet (3) moves upon rotation of the connecting member (2) in one direction into its upper boundary position, and upon rotation of the connecting member (2) in the opposite direction into its lower boundary position.

7. The motion absorber according to one of the Claims 3 to 5, wherein the permanent magnet (3) is arranged on an inside face of the housing (1) and is rigidly connected to same, and the opposite pole (4) is arranged axially movably with respect to the connecting member (2) at the other end of the connecting member (2) between an upper boundary position and a lower boundary position, whereby the opposite pole (4) moves upon rotation of the connecting member (2) in one direction into its upper boundary position, and upon rotation of the connecting member (2) in the opposite direction into its lower boundary position.

8. The motion absorber according to one of the preceding claims, wherein a viscous liquid (8) is present at least in the area between the permanent magnet (3) and the opposite pole (4), which liquid absorbs speed-dependently the movement of the connecting member (2) in addition to the magnetic braking force.

## Revendications

1. Amortisseur de mouvement, avec un boîtier (1), un élément de liaison (2) qui est monté à déplacement par rapport au boîtier et qui peut être relié à une pièce mobile (25) dont le mouvement doit être amorti, et avec un élément amortisseur en deux parties, qui comprend un aimant permanent (3) et un pôle opposé (4), le mouvement de l'élément de liaison (2) dans le boîtier (1) étant amorti par la force magnétique entre l'aimant permanent (3) et le pôle opposé (4), **caractérisé en ce que** la distance entre l'aimant permanent (3) et le pôle opposé (4) peut être modifiée entre une position limite supérieure et une position limite inférieure par rotation de l'élément de liaison (2) par rapport au boîtier (1), la distance à la position limite supérieure se réglant lors de la rotation de l'élément de liaison (2) dans une direction, et la distance à la position limite inférieure lors de la rotation de l'élément de liaison dans la direction opposée.

2. Amortisseur de mouvement selon la revendication 1, **caractérisé en ce que** l'aimant permanent est disposé sur l'élément de liaison, et le pôle opposé (4) est disposé à l'intérieur du boîtier à distance de l'aimant permanent (3) et est formé par un autre aimant permanent ou par une plaque en un matériau magnétisable.

3. Amortisseur de mouvement selon la revendication 1 ou 2, **caractérisé en ce que** l'élément de liaison (2) est réalisé sous forme d'arbre et est monté à rotation dans le boîtier (1), et l'une (5) des extrémités de l'élément de liaison (2) est guidée hors du boîtier (1) par une ouverture frontale (6).

4. Amortisseur de mouvement selon la revendication 3, **caractérisé en ce que** l'élément amortisseur est formé par un aimant permanent (3) disposé à l'autre extrémité de l'élément de liaison (2), et par une plaque métallique (4) disposée à l'intérieur du boîtier (1) sur le côté frontal opposé à l'ouverture (6), à distance de l'aimant permanent (3).

5. Amortisseur de mouvement selon la revendication 3, **caractérisé en ce que** l'élément amortisseur est formé par une plaque métallique (4) disposée à l'autre extrémité de l'élément de liaison (2), et par un aimant permanent (3) disposé à l'intérieur du boîtier sur le côté frontal opposé à l'ouverture (6), à distance de la plaque métallique (4).

6. Amortisseur de mouvement selon l'une des revendications 3 à 5, **caractérisé en ce que** le pôle opposé (4) est disposé frontalement à l'intérieur du boîtier et est rigidement assemblé à ce dernier, et l'aimant permanent (3) est disposé à l'autre extrémité de l'élément de liaison (2), à translation axiale entre une position limite supérieure et une position limite inférieure par rapport à l'élément de liaison (2), l'aimant permanent (3) se déplaçant dans sa position limite supérieure lors de la rotation de l'élément de liaison (2) dans une direction, et dans sa position limite inférieure lors de la rotation de l'élément de liaison (2) dans la direction opposée.

7. Amortisseur de mouvement selon l'une des revendications 3 à 5, **caractérisé en ce que** l'aimant permanent (3) est disposé frontalement à l'intérieur du boîtier (1) et est rigidement assemblé à ce dernier, et le pôle opposé (4) est disposé à l'autre extrémité de l'élément de liaison (2), à translation axiale entre une position limite supérieure et une position limite inférieure par rapport à l'élément de liaison (2), le pôle opposé (4) se déplaçant dans sa position limite supérieure lors de la rotation de l'élément de liaison (2) dans une direction, et dans sa position limite inférieure lors de la rotation de l'élément de liaison (2) dans la direction opposée.

8. Amortisseur de mouvement selon l'une des revendications précédentes, **caractérisé en ce qu'**un fluide visqueux (8) est introduit au moins dans la région située entre l'aimant permanent (3) et le pôle opposé (4), fluide qui, en plus de la force de freinage magnétique, amortit en fonction de la vitesse le mouvement de l'élément de liaison (2).
